Europäisches Patentamt

European Patent Office

Office européen des brevets

(19)

(11) Numéro de publication: **0 275 734**
**A1**

# (12) DEMANDE DE BREVET EUROPEEN

(21) Numéro de dépôt: **87402797.2**

(22) Date de dépôt: **10.12.87**

(51) Int. Cl.⁴: **G06F 1/00** , **H01R 13/639**

(30) Priorité: **11.12.86 FR 8617336**

(43) Date de publication de la demande:
**27.07.88 Bulletin 88/30**

(84) Etats contractants désignés:
**BE DE GB IT NL**

(71) Demandeur: **MORS**
**4 avenue Velasquez**
**F-75008 Paris(FR)**

(72) Inventeur: **Finet, Claude**
**22 rue Camille Desmoulins**
**F-75011 Paris(FR)**

(74) Mandataire: **Bernasconi, Jean et al**
**CABINET LEMOINE ET BERNASCONI 13,**
**Boulevard des Batignolles**
**F-75008 Paris(FR)**

(54) **Dispositif de protection de poste informatique à clavier.**

(57) Le clavier séparé (1) est relié à l'unité centrale
par un cordon de liaison (4) dont les connexions au
niveau du clavier et au niveau de l'unité centrale ne
sont pas normalement amovibles, le clavier comportant à son intérieur un circuit électronique de
verrouillage (5) à mémoire non volatile codable par
l'utilisateur autorisé et ne permettant le fonctionnement qu'une fois que le code a été entré.

Fig. 1

EP 0 275 734 A1

## Dispositif de protection de poste informatique à clavier

La présente invention a trait à un dispositif de protection pour poste informatique à clavier, notamment pour micro-ordinateur de type personnel (PC), ainsi que pour tous autres claviers d'informatique.

Il n'existe pas actuellement, sur les micro-ordinateurs personnels, utilisés en grand nombre dans les entreprises, de dispositifs efficaces de protection verrouillant l'accès de façon à protéger les informations contenues dans le micro-ordinateur et qui peuvent souvent avoir une grande importance économique ou commerciale.

Certes, de nombreux programmes utilisés sur ces micro-ordinateurs ne sont accessibles que par le biais de mots de passe, mais ceux-ci sont, en général, faciles à décoder et n'offrent qu'une protection réduite. Dans certains cas, des dispositifs de sécurité "câblés" existent au niveau de l'unité centrale du micro-ordinateur mais seuls de rares appareils sont équipés de tels dispositifs.

La présente invention se propose de remédier à ces inconvénients et de fournir, à un coût particulièrement réduit, un dispositif de protection pour poste informatique à clavier, notamment pour micro-ordinateur de type personnel, garantissant un niveau élevé de sécurité contre le vol, le piratage ou la destruction d'informations confidentielles.

L'invention a pour objet un dispositif pour poste informatique à clavier, notamment micro-ordinateur du type personnel, comprenant une unité à clavier séparé reliée à l'unité centrale par un cordon de liaison, caractérisé en ce qu'il comporte, logé dans le clavier, un circuit électronique de verrouillage à mémoire non volatile codable par l'utilisateur autorisé et ne permettant une communication efficace entre le clavier et l'unité centrale, par l'intermédiaire du cordon, que lorsque le code mémorisé dans ledit circuit a été entré au clavier, et en ce que les connexions du cordon au niveau du clavier et au niveau de l'unité centrale ne sont pas normalement amovibles.

Le circuit électronique de verrouillage peut être un circuit d'un type connu, par exemple du genre dit Digicode. De tels circuits sont déjà utilisés dans de nombreux dispositifs de verrouillage électronique, notamment pour les serrures, et sont agencés pour être actionnés par des touches convenables d'un clavier. Dans le cas de la présente invention, le circuit peut avantageusement être relié aux touches numériques du clavier d'ordinateur. Ces circuits peuvent utiliser notamment des composants du genre EA ROM ou EE PROM et peuvent incorporer une pile ou batterie ou bien être alimentés par l'alimentation de l'unité centrale.

La liaison du cordon avec le clavier s'effectue de préférence en faisant pénétrer le cordon dans l'enveloppe du boîtier pour l'y fixer à demeure et, dans ce cas, on peut avantageusement réaliser l'enveloppe de façon qu'elle ne puisse pas être ouverte par des moyens non spécialisés, l'agencement étant tel, de préférence, qu'une ouverture par effraction soit immédiatement visible.

La liaison du cordon avec l'unité centrale, qui s'effectue en général par un connecteur normalisé DIN, peut également être rendue inamovible par différents moyens, formant, par exemple, des connecteurs verrouillables.

Ainsi, on peut, par exemple, déposer le connecteur, en général femelle, de l'unité centrale, faire entrer le cordon dans celle-ci et fixer ses conducteurs directement aux emplacements de connexion prévus, ce qui demande un démontage de l'unité centrale.

On peut également prévoir de remplacer le connecteur de l'unité centrale, en général un connecteur DIN femelle, par un connecteur muni d'un dispositif mécanique qui, lorsqu'il coopère la première fois avec le connecteur mâle du cordon, assure un liaison inamovible entre les deux connecteurs. Il peut s'agir, par exemple, d'un encliquetage irréversible.

On peut également prévoir d'équiper seulement le connecteur de cordon avec des moyens de blocage qui, lorsqu'ils sont mis en oeuvre, empêchent sa séparation d'avec le connecteur de l'unité centrale, par exemple par resserrement hermétique de l'enveloppe périphérique du connecteur de cordon sur ou dans la collerette périphérique du connecteur d'unité centrale ou par déformation des broches mâles de contact du connecteur de cordon dans les contacts femelles du connecteur d'unité centrale.

De façon avantageuse, on peut prévoir qu'on puisse séparer le connecteur de cordon d'avec le connecteur de l'unité centrale et/ou d'avec le clavier mais uniquement en étant obligé de fracturer un élément de blocage tel que par exemple un collier de serrage fracturable.

Le clavier peut avantageusement être équipé de moyens de visualisation indiquant à l'utilisateur qu'il est autorisé ou non à communiquer avec l'unité centrale. Ainsi on peut, par exemple, prévoir deux voyants, l'un, par exemple de couleur rouge, étant allumé lors de la mise en route de l'ordinateur et l'autre, de couleur verte, ne s'allumant qu'une fois que le code correct a été entré au clavier, provoquant l'extinction du voyant rouge.

D'autres avantages et caractéristiques de l'invention apparaîtront à la lecture de la description suivante, faite à titre d'exemple non limitatif et se référant au dessin annexé dans lequel :

la figure 1 représente une vue schématique d'un clavier selon l'invention,

la figure 2 représente une vue schématique d'une connexion de cordon sur l'unité centrale,

la figure 3 représente une vue du collier de verrouillage utilisé,

la figure 4 représente une vue schématique du circuit connu de verrouillage.

Le clavier 1 du dispositif selon l'invention est un clavier de type usuel dont on a représenté la face supérieure. Ce clavier comporte une enveloppe 2 dont la face supérieure présente des touches alphanumériques et fonctionnelles 3 usuelles dans un clavier d'ordinateur et dont quelques-unes seulement ont été représentées à titre d'illustration. L'enveloppe du clavier est réalisée de façon à être pratiquement indémontable sauf en usine, de sorte qu'une personne mal intentionnée n'aura pratiquement pas la possibilité d'accéder à l'intérieur du clavier, sauf en le fracturant.

Le cordon 4, qui relie le clavier 1 à l'unité centrale de l'ordinateur, pénètre à l'intérieur du clavier dans lequel il est solidarisé. Il aboutit à un circuit ou unité électronique 5 avant que les conducteurs du cordon ne soient distribués aux différents composants usuels du clavier. Le circuit électronique 5 peut être d'un type quelconque tel que EA ROM, ou EE PROM ou un microprocesseur. Il est conçu d'une façon en soi connue pour interdire le passage des informations par le cordon 4 en provenance du clavier tant qu'un code, mémorisé à demeure dans le circuit 5, n'aura pas été adressé à l'unité de traitement du circuit 5 par des touches convenables du clavier auxquelles l'unité 5 est reliée à cet effet, par exemple les touches numériques. De tels circuits sont disponibles dans le commerce.

En conséquence, tant que l'utilisateur n'aura pas entré, par ces touches numériques, le code correct, le circuit électronique 5 ne livrera pas l'accès au cordon 4 et l'unité centrale 10 ne pourra pas être commandée à partir du clavier.

De façon avantageuse, le clavier peut présenter deux voyants, à savoir un voyant rouge 6 et un voyant vert 7, le voyant rouge 6 s'allumant dès que l'unité centrale vient d'être mise sous tension. Le voyant 6 reste allumé tant que le circuit 5 se trouve en état de verrouillage. Lorsque le code correct est entré, le circuit 5 libère l'accès au cordon, éteint le voyant 6 et allume le voyant vert 7, signifiant que l'unité centrale est sous le contrôle du clavier.

A l'extinction de l'unité centrale, les deux voyants s'éteignent et le circuit 5 revient en état de verrouillage.

De façon schématique, le dispositif 5 peut, par exemple, comporter un dispositif de verrouillage connu contenant une mémoire 52 et une unité logique usuelle 53. L'unité logique est reliée d'une part aux touches numériques 3a du clavier 1 et d'autre part à une touche 3b utilisable lorsqu'on désire changer le numéro constituant le code. L'unité 53 contrôle aussi le fonctionnement des voyants 6 et 7. Enfin, elle commande un organe 54 d'interruption de la liaison des conducteurs en provenance du cordon 4 vers les circuits propres au clavier. La mémoire non volatile 52 mémorise le code, qui peut être modifié par une procédure usuelle. L'unité logique, lorsque le clavier est mis sous tension, par exemple par des conducteurs de puissance 55 également contenus dans le cordon 4, agit sur l'organe d'interruption 54 tant que le code juste n'a pas été entré par les touches 3a.

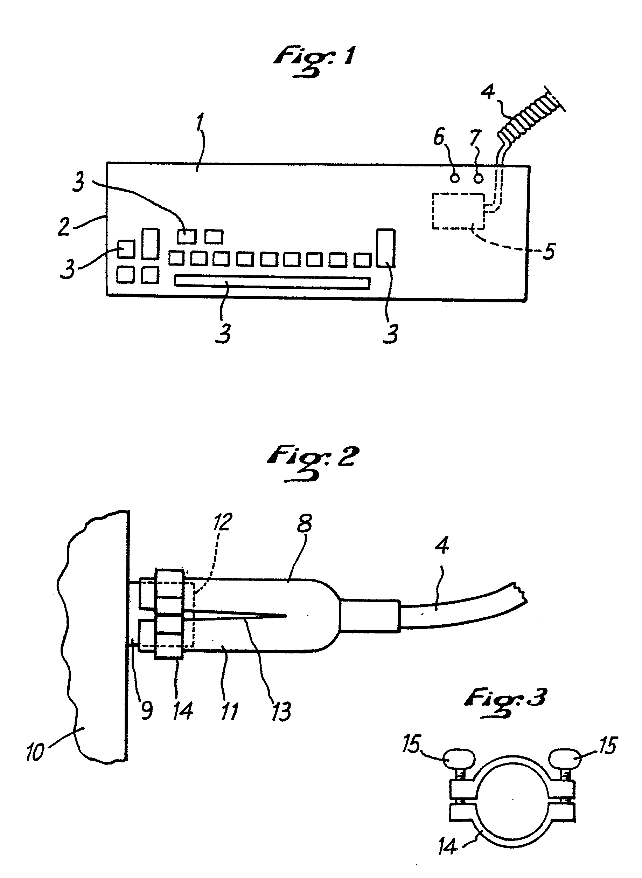

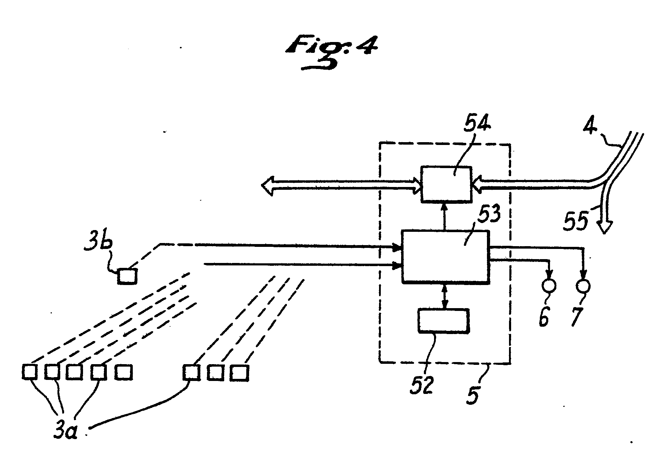

En se référant aux figures 2 et 3, on voit l'autre extrémité du cordon 4 qui présente un connecteur mâle 8 que l'on vient enficher dans le connecteur femelle 9 présenté par l'unité centrale 10. Comme cela est usuel dans ce genre de connecteur, notamment les connecteurs DIN, l'enveloppe cylindrique périphérique 11 de l'unité centrale entoure, par son extrémité antérieure, la collerette périphérique 12 qui protège les contacts femelles du connecteur 9, dans lesquels les contacts mâles du connecteur 8 ont été introduits. L'enveloppe 11 présente une ou plusieurs fentes longitudinales 13 permettant une certaine déformation élastique de l'enveloppe 11. L'enveloppe 11 est entourée d'un collier de serrage 14 en deux parties d'un type usuel que l'on serre par une vis papillon fracturable 15. Une fois que le collier 14 a été convenablement serré par les vis 15, ce qui provoque le rétrécissement des fentes 13, l'enveloppe 11 est serrée hermétiquement sur la collerette 9 et l'extraction du connecteur 8 ne peut plus être effectuée.

L'utilisateur poursuit alors le vissage des vis 15, ce qui provoque leur fracture à un niveau tel que la partie de vis restante, située dans le collier 14, n'est plus accessible.

Bien entendu, différents autres types de blocage de connecteurs peuvent être prévus, et l'on peut également, si on le désire, remplacer le connecteur standard femelle de l'unité centrale 10 par un connecteur muni d'un moyen d'encliquetage qui coopère avec un connecteur encliquetable correspondant mâle porté par l'extrémité du cordon 4, l'encliquetage s'effectuant dans des conditions telles qu'une fois les moyens d'encliquetage en place, une effraction devient impossible.

Bien entendu, toutes sortes d'autres moyens de blocage peuvent être utilisés. Ainsi on peut prévoir, par exemple, des broches mâles expansibles dans le connecteur 8 de cordon et un mécanisme à coin ou rampe permettant l'expansion des broches mâles dans les contacts tubulaires femelles du connecteur de l'unité centrale, entraînant le coincement des broches dans les contacts femelles.

Bien que l'invention ait été décrite à propos d'une forme de réalisation particulière, il est bien entendu qu'elle n'y est nullement limitée et qu'on peut lui apporter diverses modifications de forme ou de matériau sans pour cela s'éloigner ni de son cadre ni de son esprit.

**Revendications**

1. Dispositif pour poste informatique à clavier, notamment micro-ordinateur du type personnel, comprenant une unité centrale (10) avec un clavier séparé (1) relié à l'unité centrale par un cordon de liaison (4), caractérisé en ce qu'il comporte, logé dans le clavier (1), un circuit électronique de verrouillage (5) à mémoire non volatile codable par l'utilisateur autorisé et ne permettant une communication efficace entre le clavier et l'unité centrale, par l'intermédiaire du cordon, que lorsque le code mémorisé dans ledit circuit (5) a été entré au clavier, et en ce que les connexions du cordon (4) au niveau du clavier (1) et au niveau de l'unité centrale (10) ne sont pas amovibles.

2. Dispositif selon la revendication 1, caractérisé en ce que le circuit électronique de verrouillage (5) est un circuit du genre dit Digicode.

3. Dispositif selon l'une quelconque des revendications 1 et 2, caractérisé en ce que le circuit électronique de verrouillage (5) est actionné par les touches numériques du clavier.

4. Dispositif selon l'une quelconque des revendications 1 à 3, caractérisé en ce que la liaison du cordon avec le clavier (1) s'effectue à l'intérieur de l'enveloppe du clavier (1), réalisée pour ne pas pouvoir être ouverte par des moyens non spécialisés.

5. Dispositif selon l'une quelconque des revendications 1 à 4, caractérisé en ce que la liaison du cordon (4) avec l'unité centrale (10) s'effectue au moyen de connecteurs verrouillables.

6. Dispositif selon la revendication 5, caractérisé en ce que la liaison s'effectue par des connecteurs encliquetables.

7. Dispositif selon la revendication 5, caractérisé en ce que la liaison s'effectue par des connecteurs normalisés, notamment connecteurs DIN, l'un (8) des connecteurs, notamment celui de cordon, étant muni de moyens de blocage empêchant la séparation du connecteur (8) de cordon d'avec le connecteur (9) de l'unité centrale.

8. Dispositif selon la revendication 7, caractérisé en ce que lesdits moyens de blocage comportent un collier de serrage de l'enveloppe (11) déformable du connecteur (8) de cordon contre la collerette (12) correspondante du connecteur (9) d'unité centrale, ledit collier étant serré par des vis fracturables (15).

9. Dispositif selon l'une quelconque des revendications 1 à 8, caractérisé en ce que le clavier comporte des moyens de visualisation indiquant à l'utilisateur qu'il est autorisé ou non à communiquer avec l'unité centrale.

10. Dispositif selon la revendication 9, caractérisé en ce qu'il comporte deux voyants (6, 7), l'un (6) étant actionné lors de la mise en route de l'unité centrale et l'autre (7), n'étant actionné qu'une fois que le code correct a été entré au clavier, provoquant l'extinction du premier voyant.

*Fig. 1*

*Fig. 2*

*Fig. 3*

# Fig. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-0 201 628 (M. KAWAMURA) <br> * Résumé; figures 1,3 * <br> --- | 1 | G 06 F 1/00 <br> H 01 R 13/639 |
| Y <br><br> A | US-A-4 267 578 (E.O. VETTER) <br> * Résumé; colonne 2, lignes 48-60 * <br><br> --- | 1 <br><br> 2,3 | |
| Y <br><br><br> A | DE-A-3 304 173 (H. POTBERG) <br> * Page 5, ligne 29 - page 6, ligne 32; figures 2-5 * <br><br> --- | 1 <br><br><br> 5-7 | |
| A | IBM TECHNICAL DISCLOSURE BULLETIN, vol. 27, no. 4A, septembre 1984, page 1999, New York, US; G.C. CHUI et al.: "Keyboard inhibit mode for electronic typewriter" <br> * En entier * <br> --- | 1-3,9, 10 | |
| A | US-A-3 293 588 (I.S. BLONDER) <br> * Figure 1; colonne 1, lignes 10-17 * <br> ----- | 4 | |

**DOMAINES TECHNIQUES RECHERCHES (Int. Cl.4)**

G 06 F 1/00
G 06 F 3/02
H 01 R 13/639
H 01 R 13/627
G 07 C 9/00

Le présent rapport a été établi pour toutes les revendications

| Lieu de la recherche | Date d'achèvement de la recherche | Examinateur |
|---|---|---|
| LA HAYE | 25-03-1988 | MOENS R.A.A. |